# FASCICULE DE BREVET EUROPEEN

(11) **EP 2 780 553 B1**
(45) Date de publication et mention de la délivrance du brevet: **22.08.2018**
(21) Numéro de dépôt: 12795516.9
(22) Date de dépôt: 12.11.2012
(51) Int. Cl.: F01D 5/32, F01D 5/30, F01D 11/00

(54) **ROUE A AUBES POUR UNE TURBOMACHINE**
LAUFRAD FÜR EINE TURBOMASCHINE
IMPELLER FOR A TURBOMACHINE

(30) Priorité: 15.11.2011 FR 1160394
(43) Date de publication de la demande: 24.09.2014
(73) Titulaire: Safran Aircraft Engines, 75015 Paris (FR)
(72) Inventeur: GENDRAUD, Alain, Dominique, F-77550 Moissy Cramayel (FR); GARIN, Fabrice, Marcel, Noël, F-77550 Moissy Cramayel (FR); LUNEL, Romain, Nicolas, F-77550 Moissy Cramayel (FR)
(74) Mandataire: Jolly, Christophe
(86) Numéro de dépôt international: PCT/FR2012/052593
(87) Numéro de publication internationale: WO 2013/072605

(56) Documents cités:
- EP-A1- 0 370 899
- EP-A1- 2 053 199
- EP-A2- 1 801 354
- FR-A1- 2 413 543
- FR-A1- 2 940 353
- US-A- 2 948 505
- US-A- 3 023 998
- US-A1- 2005 232 772

## Description

La présente invention concerne une roue à aubes pour une turbomachine, telle qu'un turboréacteur ou un turbopropulseur d'avion.

Classiquement, une roue à aubes, par exemple d'une turbine basse pression, comprend un disque de rotor dont la périphérie externe comporte des nervures délimitant des alvéoles de montage axial et de retenue radiale de pieds d'aubes. Les aubes sont formées avec des plates-formes agencées circonférentiellement cote à cote et qui délimitent intérieurement une veine annulaire d'écoulement de fluide.

Les aubes comportent en outre des becquets annulaires s'étendant sensiblement axialement vers l'amont au niveau des plates-formes pour limiter le passage de fluide hors de la veine annulaire.

Les aubes en métal sont réalisées en une seule pièce par fonderie, les becquets étant formés avec les plates-formes et les pieds des aubes.

La fabrication des aubes par fonderie permet de bonnes tolérances dimensionnelles, c'est-à-dire des pièces ayant des dimensions précises correspondant sensiblement aux spécifications. Ces aubes ont toutefois une masse importante.

Afin de remédier à cet inconvénient, on a proposé de réaliser tout ou partie des aubes en matériau composite à matrice céramique (CMC). Les tolérances de fabrication des aubes en CMC sont toutefois supérieures à celles des aubes métalliques réalisées par fonderie. De plus, la fabrication des aubes en CMC est complexe car elle fait appel à un tissage et nécessite de former sur l'aube au niveau de la plate-forme deux couches de texture dont l'une constitue la surface délimitant la veine et le becquet et dont l'autre sert à l'anti-bascule de l'aube et au recouvrement aval.

Dans sa demande FR1054163, la demanderesse a déjà proposé de réaliser le becquet sous la forme d'une pièce rapportée afin de simplifier la fabrication des aubes en CMC. Des moyens d'étanchéité sont agencés entre le becquet et les plates-formes des aubes pour éviter les fuites tout en tenant compte des tolérances de fabrication des aubes en CMC.

Dans cette configuration, lors du fonctionnement de la turbomachine, le becquet est centrifugé vers l'extérieur et vient en appui sur les extrémités amont des plates-formes des aubes, ce qui conduit à une augmentation des efforts radiaux appliqués aux aubes.

L'invention a notamment pour but d'apporter une solution simple, efficace et économique à ce problème.

A cette fin, elle propose une roue à aubes pour une turbomachine, telle qu'un turboréacteur ou un turbopropulseur d'avion, comprenant un disque de rotor comportant à sa périphérie externe des nervures délimitant des alvéoles de montage axial et de retenue radiale de pieds d'aubes, les aubes comportant des plates-formes agencées circonférentiellement bout à bout pour délimiter une veine annulaire d'écoulement d'un flux d'air, un becquet annulaire s'étendant sensiblement axialement vers l'amont étant rapporté sur une face amont du disque pour limiter le passage d'air hors de la veine annulaire, des moyens d'étanchéité étant prévus entre le becquet annulaire et les extrémités amont des plates-formes des aubes, caractérisée en ce que le becquet annulaire comprend un rebord annulaire s'étendant axialement vers l'aval et radialement à l'intérieur de moyens de retenue radiale du becquet annulaire sur le disque, ces moyens de retenue étant formés en saillie axiale sur la face amont du disque, les moyens d'étanchéité étant agencés radialement à l'intérieur du becquet annulaire et des extrémités amont des plates-formes des aubes.

Les moyens de retenue radiale du becquet annulaire formés sur le disque évitent en fonctionnement que les extrémités amont des aubes ne soient soumises à des efforts radiaux supplémentaires dus à la centrifugation du becquet annulaire.

Le becquet peut être de forme annulaire continue sur 360°. Il peut également se présenter sous la forme de plusieurs secteurs distincts agencés bout à bout en formant un anneau, ce qui permet de bien compenser les dilatations différentielles entre le disque et le becquet.

Selon une caractéristique de l'invention, les moyens de retenue radiale sont formés aux extrémités amont et radialement externes des nervures du disque.

Selon une autre caractéristique de l'invention, le rebord annulaire du becquet comprend une paroi sensiblement cylindrique en appui radialement vers l'extérieur sur les moyens de retenue radiale et reliée à son extrémité aval à une paroi annulaire radiale.

Selon encore une autre caractéristique de l'invention, des ergots sont formés en saillie axiale sur la face amont du disque, sensiblement à la base des nervures du disque et en regard de l'extrémité radialement interne du rebord annulaire radial du becquet.

Au montage du becquet sur le disque ainsi qu'à l'arrêt de la turbomachine, les ergots assurent un positionnement et un maintien radial du becquet annulaire sur la face amont du disque. De cette manière, les moyens d'étanchéité sont correctement positionnés par rapport au becquet et aux extrémités amont des plates-formes.

Avantageusement, la paroi annulaire radiale du rebord du becquet comporte au moins un doigt d'anti-rotation faisant saillie radialement vers l'intérieur et engagé circonférentiellement entre deux ergots consécutifs, ce qui permet de garantir un blocage en rotation du becquet annulaire sur le disque.

Selon une caractéristique de l'invention, le becquet annulaire comprend une gorge annulaire ouverte vers l'aval pour le logement des moyens d'étanchéité, cette gorge étant délimitée intérieurement par la paroi cylindrique et extérieurement par une paroi annulaire tronconique à section augmentant vers l'aval.

Dans une réalisation particulière de l'invention, les moyens d'étanchéité comprennent un joint annulaire intercalé radialement entre la paroi tronconique et les moyens de retenue radiale en saillie sur la face amont du disque, ledit joint étant apte à se déplacer radialement vers l'extérieur par effet centrifuge lors de la rotation de la roue à aubes et à s'appliquer contre la paroi tronconique et les extrémités amont des plates-formes.

Le joint est mobile radialement par rapport au becquet, ce qui permet par effet centrifuge que le joint vienne correctement se plaquer contre la paroi tronconique et les extrémités amont des plates-formes.

Préférentiellement, le joint annulaire a une section sensiblement triangulaire et comporte une face tronconique destinée à venir en contact avec la paroi tronconique du becquet et une face sensiblement radiale destinée à venir en appui axial sur une face radiale des extrémités amont des plates-formes des aubes.

Selon une autre caractéristique de l'invention, le becquet annulaire est serré axialement sur le disque de rotor par un flasque amont fixé au disque de rotor.

De façon connue, l'extrémité interne du flasque porte des léchettes formant un joint à labyrinthe par coopération avec un bloc abradable d'un distributeur fixe agencé en amont.

Dans le mode de réalisation préféré de l'invention, les aubes sont réalisées en matériau composite à matrice céramique (CMC).

L'invention concerne également une turbomachine telle qu'un turboréacteur ou un turbopropulseur d'avion, comprenant au moins une roue à aubes telle que décrite ci-dessus, en particulier dans une turbine basse pression.

D'autres avantages et caractéristiques de l'invention apparaîtront à la lecture de la description suivante faite à titre d'exemple non limitatif et en référence aux dessins annexés dans lesquels :
- la figure 1 est une vue en perspective d'une partie d'une roue à aubes selon la technique antérieure ;
- la figure 2 est une vue schématique en coupe axiale d'une roue à aubes selon l'invention ;
- la figure 3 est une vue schématique en perspective du becquet annulaire selon l'invention ;
- la figure 4 est une vue schématique en perspective depuis l'amont du becquet annulaire selon l'invention ;
- la figure 5 est une vue schématique en coupe axiale de la zone délimitée en pointillés sur la figure 2.

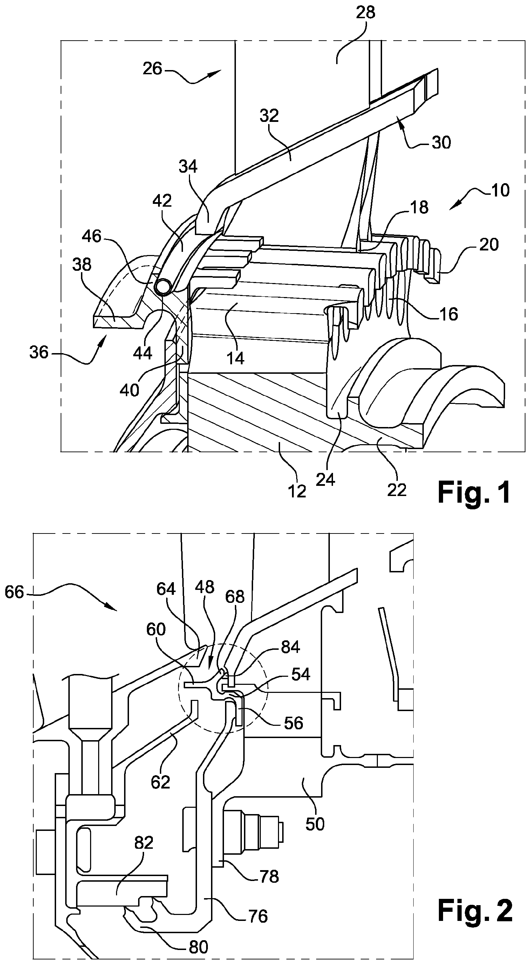

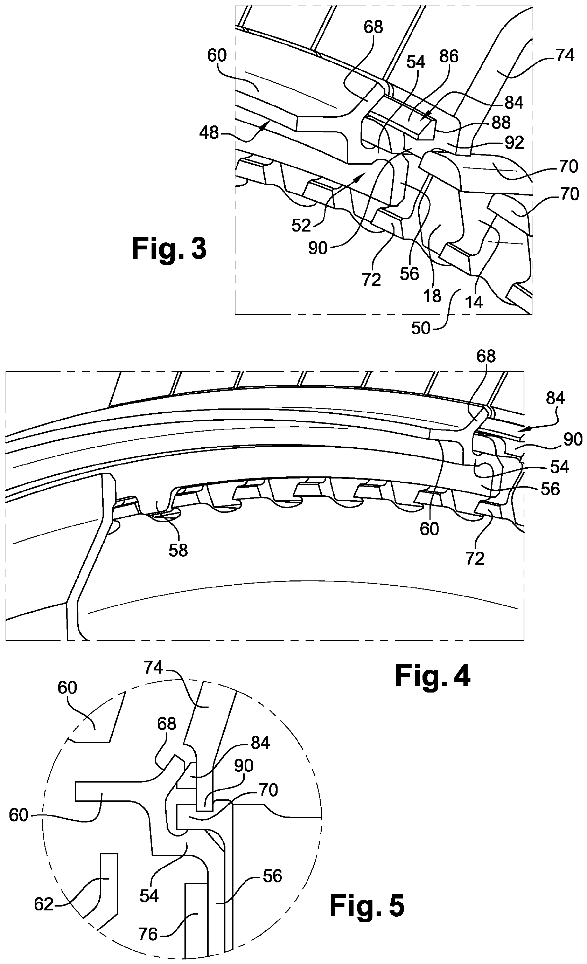

La figure 1 représente une roue à aubes 10 décrite dans le document FR1054163. La roue à aubes 10 comporte un disque 12 de rotor dont la périphérie externe comporte des nervures 14 délimitant des alvéoles 16 en queue d'aronde pour le montage axial et la retenue radiale de pieds d'aubes 18 (figures 3 et 4). Les extrémités aval des nervures 14 sont pourvues de crochets 20 tournés radialement vers l'intérieur. Les sommets des nervures 14 sont sensiblement plans.

Le disque 12 de turbine est également pourvu d'un rebord cylindrique 22 s'étendant axialement vers l'aval dans une zone située radialement entre le fond des alvéoles 16 et la périphérie interne du disque 12. Une gorge 24 située radialement sensiblement en regard des crochets 20 est formée dans ce rebord 22. La gorge 24 et les crochets 20 servent à la fixation de moyens d'arrêt axiaux (non représentés) des pieds 18 des aubes.

Les aubes 26 comportent des pales 28 s'étendant radialement et des plates-formes 30 délimitant intérieurement une veine annulaire d'écoulement de fluide, formées à la base des pales 28 et reliées aux pieds 18 des aubes 26.

Les plates-formes 30 comportent une partie centrale 32 oblique par rapport à la direction axiale, prolongée par une partie amont 34 recourbée radialement vers l'intérieur.

Les plates-formes 30 des aubes 26 sont disposées côte à côte et des moyens sont prévus pour assurer l'étanchéité entre leurs bords latéraux en vis-à-vis circonférentiel.

La roue à aubes 10 comporte un becquet annulaire 36 métallique rapporté sur la face amont du disque 12 de rotor à la périphérie externe de ce disque 12. Ce becquet 36 comprend une paroi cylindrique 38 s'étendant sensiblement axialement vers l'amont au niveau des extrémités amont des plates-formes 30 et destiné à limiter le passage de fluide hors de la veine annulaire. Ce becquet 36 comporte également une paroi annulaire 40 s'étendant sensiblement radialement, destinée à venir en appui contre la face amont du disque 12 de rotor. Des moyens d'étanchéité 42 sont prévus entre le becquet 36 et les extrémités amont des plates-formes 30 des aubes 26.

Ces moyens d'étanchéité comprennent un joint torique 42 monté dans une gorge 44 du becquet 36 comportant une paroi tronconique 46 à section augmentant vers l'aval, de façon à ce que le joint soit pressé de l'amont vers l'aval contre les bords amont 34 des plates-formes 30.

Lors du fonctionnement de la turbomachine, le becquet 36 est centrifugé vers l'extérieur et vient en appui par l'intermédiaire du joint 42 sur les bords amont 34 des plates-formes 30, ce qui augmente les efforts radiaux appliqués aux aubes 26.

L'invention apporte une solution à ce problème au moyen d'un becquet 48 qui est, en fonctionnement, en appui radialement vers l'extérieur sur des moyens de retenue radiale formés en saillie sur la face amont du disque 50.

Dans le mode de réalisation représenté, le becquet 48 comprend un rebord annulaire 52 comprenant une paroi sensiblement cylindrique 54 reliée à son extrémité aval à une paroi annulaire 56 s'étendant radialement vers l'intérieur (figures 2 et 3). La paroi annulaire radiale 56 comprend au moins un doigt d'anti-rotation 58 faisant saillie radialement vers l'intérieur (figure 4). Le becquet 48 comporte également une seconde paroi cylindrique 60 s'étendant axialement vers l'amont entre deux parties annulaires fixes 62, 64 d'un distributeur 66 agencé en amont de manière à limiter le passage d'air hors de la veine annulaire (figures 2 et 5).

La paroi cylindrique 54 du rebord annulaire 52 du becquet 48 délimite, avec une paroi tronconique 68 à section augmentant vers l'aval, une gorge annulaire ouverte vers l'aval.

Les moyens de retenue radiale comprennent des pattes 70 formées aux extrémités amont et radialement externes des nervures 14 du disque 50. Ces pattes 70 sont en surépaisseur sur les nervures 14 du disque 50 et s'étendent en saillie axiale sur la face amont du disque 50. Chaque nervure 14 du disque 50 comprend un ergot 72 formé sensiblement à la base de la nervure et en regard de l'extrémité radialement interne de la paroi annulaire radiale 56 du rebord annulaire 52 du becquet 48.

Lorsque le becquet 48 est engagé axialement vers l'aval sur la face amont du disque 50, le rebord annulaire 52 vient se loger entre les pattes 70 et les ergots 72 en saillie sur la face amont du disque 50, ce qui réalise un positionnement du becquet 48 sur le disque 50. En fonctionnement, la retenue radiale du becquet 48 est assurée par les pattes 70 du disque 50 et non plus par les bords amont 74 des plates-formes, ce qui permet de réduire les efforts radiaux appliqués aux aubes. De plus, le doigt 58 de la paroi annulaire radiale 56 vient se loger circonférentiellement entre deux ergots 72 consécutifs du disque 50, ce qui assure un blocage en rotation du becquet 48 sur le disque 50.

Le becquet 48 est serré sur la face amont du disque 50 de rotor par un flasque 76 fixé par boulonnage sur une bride radiale 78 du disque 50. Le flasque 76 porte à son extrémité interne des léchettes 80 qui forment un joint à labyrinthe avec un bloc abradable 82 du distributeur 66 (figure 2).

Des moyens d'étanchéité 84 sont intercalés entre les pattes 70 des nervures 14 du disque 50 et la paroi tronconique 68 du becquet 48.

Dans le mode de réalisation représenté, les moyens d'étanchéité comprennent un joint annulaire 84 à section sensiblement triangulaire dont une face tronconique 86 est positionnée sensiblement en vis-à-vis radial de la paroi tronconique 68 du becquet 48 et dont une autre face radiale 88 est positionnée en regard de faces radiales correspondantes des bords amont 74 des plates-formes.

Lors du fonctionnement de la turbomachine, le joint 84 se déplace le long de la paroi tronconique 68 sous l'effet de la force centrifuge, jusqu'à venir se plaquer contre les bords amont 74 des plates-formes (figures 3 et 5).

Le joint 84 est suffisamment déformable pour compenser les tolérances dimensionnelles dues au procédé de fabrication des aubes en CMC.

Le joint peut également être fendu de manière à faciliter son expansion sous l'effet de la force centrifuge.

Le bord amont 74 de chaque plate-forme comprend une dent 90 s'étendant sensiblement radialement vers l'intérieur et formée dans une partie sensiblement médiane du bord 74 de la plate-forme. Lors du montage axial des pieds d'aubes 18 dans les alvéoles 16, les dents 90 des plates-formes s'engagent chacune axialement entre deux pattes 70 consécutives du disque 50. Chaque bord amont d'une plate-forme comprend deux parties latérales 92 de part et d'autre de la dent 90 de la plate-forme et positionnées radialement en regard d'une patte 70 du disque 50 avec un jeu prédéterminé. Ces parties latérales 92 sont destinées à venir en appui sur les pattes 70 du disque 50 pour limiter le basculement des aubes en direction circonférentielle (figure 3).

Lorsque le becquet 48 est sectorisé, chaque secteur de becquet peut comprendre un doigt 58 d'anti-rotation coopérant circonférentiellement avec des ergots 72 du disque 50.

## Revendications

1. Roue à aubes pour une turbomachine, telle qu'un turboréacteur ou un turbopropulseur d'avion, comprenant un disque (50) de rotor comportant à sa périphérie externe des nervures (14) délimitant des alvéoles (18) de montage axial et de retenue radiale de pieds d'aubes, les aubes comportant des plates-formes agencées circonférentiellement bout à bout pour délimiter une veine annulaire d'écoulement d'un flux d'air, un becquet annulaire (48) s'étendant sensiblement axialement vers l'amont étant rapporté sur une face amont du disque (50) pour limiter le passage d'air hors de la veine annulaire, des moyens d'étanchéité (84) étant prévus entre le becquet annulaire (48) et les extrémités amont des plates-formes des aubes, **caractérisée en ce que** le becquet annulaire (48) comprend un rebord annulaire (52) s'étendant axialement vers l'aval et radialement à l'intérieur de moyens de retenue radiale (70) du becquet annulaire (48) sur le disque (50), ces moyens de retenue (70) étant formés en saillie axiale sur la face amont du disque (50), les moyens d'étanchéité (84) étant agencés radialement à l'intérieur du becquet annulaire (48) et des extrémités amont des plates-formes des aubes.

2. Roue à aubes selon la revendication 1, **caractérisé en ce que** les moyens de retenue radiale (70) sont formés aux extrémités amont et radialement externes des nervures (14) du disque (50).

3. Roue à aubes selon la revendication 1 ou 2, **caractérisée en ce que** le rebord annulaire (52) du becquet (48) comprend une paroi sensiblement cylindrique (54) en appui radialement vers l'extérieur sur les moyens de retenue radiale (70) et reliée à son extrémité aval à une paroi annulaire radiale (56).

4. Roue à aubes selon la revendication 3, **caractérisée en ce que** des ergots (72) sont formés en saillie axiale sur la face amont du disque (50), sensiblement à la base des nervures (14) du disque (50) et en regard de l'extrémité radialement interne du rebord annulaire radial (52) du becquet (48).

5. Roue à aubes selon la revendication 4, **caractérisée en ce que** la paroi annulaire radiale (56) du rebord (52) du becquet (48) comporte au moins un doigt d'anti-rotation (58) faisant saillie radialement vers l'intérieur et engagé circonférentiellement entre deux ergots (72) consécutifs.

6. Roue à aubes selon l'une des revendications 3 à 5, **caractérisée en ce que** le becquet annulaire (48) comprend une gorge annulaire ouverte vers l'aval pour le logement des moyens d'étanchéité, cette gorge étant délimitée intérieurement par la paroi cylindrique (54) et extérieurement par une paroi annulaire tronconique (68) à section augmentant vers l'aval.

7. Roue à aubes selon la revendication 6, **caractérisée en ce que** les moyens d'étanchéité comprennent un joint annulaire (84) intercalé radialement entre la paroi tronconique (68) et les moyens de retenue radiale (70) en saillie sur la face amont du disque, ledit joint (84) étant apte à se déplacer radialement vers l'extérieur par effet centrifuge lors de la rotation de la roue à aubes et à s'appliquer contre la paroi tronconique (68) et les extrémités amont des plates-formes.

8. Roue à aubes selon la revendication 7, **caractérisée en ce que** le joint (84) annulaire a une section sensiblement triangulaire et comporte une face tronconique (86) destinée à venir en contact avec la paroi tronconique (68) du becquet (48) et une face (88) sensiblement radiale destinée à venir en appui axial sur une face radiale des extrémités amont des plates-formes des aubes.

9. Roue selon l'une des revendications précédentes, **caractérisée en ce que** le becquet annulaire (48) est serré axialement sur le disque (50) de rotor par un flasque amont (46) fixé au disque de rotor.

10. Roue à aubes selon l'une des revendications précédentes, **caractérisée en ce que** les aubes sont réalisées en matériau composite à matrice céramique.

11. Turbomachine telle qu'un turboréacteur ou un turbopropulseur d'avion, comprenant au moins une roue à aubes selon l'une des revendications précédentes, en particulier dans une turbine basse-pression.

## Patentansprüche

1. Schaufelrad für ein Turbotriebwerk, wie etwa ein Turbostrahltriebwerk oder Turboprop-Triebwerk für Flugzeuge, enthaltend eine Rotorscheibe (50), die an ihrem Außenumfang Rippen (14) aufweist, die Zellen (18) zum axialen Lagern und radialen Festhalten von Schaufelfüßen eingrenzen, wobei die Schaufeln Plattformen aufweisen, die umfänglich auf Stoß angeordnet sind, um einen ringförmigen Luftströmungskanal zu begrenzen, wobei ein sich im Wesentlichen axial in Richtung stromaufwärts erstreckender ringförmiger Vorsprung (48) an eine stromaufwärtige Seite der Scheibe (50) angesetzt ist, um den Luftdurchtritt aus dem ringförmigen Kanal zu begrenzen, wobei Dichtungseinrichtungen (84) zwischen dem ringförmigen Vorsprung (48) und den stromaufwärtigen Enden der Plattformen der Schaufeln vorgesehen sind,
**dadurch gekennzeichnet, dass**
der ringförmige Vorsprung (48) eine ringförmige Randleiste (52) aufweist, die sich axial in Richtung stromabwärts und radial innerhalb der Haltemittel (70) zum radialen Festhalten des ringförmigen Vorsprungs (48) an der Scheibe (50) aufweist, wobei diese Haltemittel (70) an der stromaufwärtigen Seite der Scheibe (50) axial vorspringend ausgebildet sind, wobei die Dichtungseinrichtungen (84) radial innerhalb des ringförmigen Vorsprungs (48) und der stromaufwärtigen Enden der Plattformen der Schaufeln angeordnet sind.

2. Schaufelrad nach Anspruch 1, **dadurch gekennzeichnet, dass** die Haltemittel (70) zum radialen Festhalten an den stromaufwärtigen und radial äußeren Enden der Rippen (14) der Scheibe (50) ausgebildet sind.

3. Schaufelrad nach Anspruch 1 oder 2, **dadurch gekennzeichnet, dass** die ringförmige Randleiste (52) des Vorsprungs (48) eine im Wesentlichen zylindrische Wand (54) enthält, die radial nach außen in Anlage an den Haltemitteln (70) zum radialen Festhalten ist und an ihrem stromabwärtigen Ende mit einer radial verlaufenden, ringförmigen Wand (56) verbunden ist.

4. Schaufelrad nach Anspruch 3, **dadurch gekennzeichnet, dass** an der stromaufwärtigen Seite der Scheibe (50) axial vorspringende Nasen (72) im Wesentlichen an der Basis der Rippen (14) der Scheibe (50) und dem radial inneren Ende der radial verlaufenden, ringförmigen Randleiste (52) des Vorsprungs (48) ausgebildet sind.

5. Schaufelrad nach Anspruch 4, **dadurch gekennzeichnet, dass** die radial verlaufende, ringförmige Wand (56) der Randleiste (52) des Vorsprungs (48) zumindest einen Drehschutzzapfen (58) aufweist, der radial nach innen vorspringt und umfänglich zwischen zwei aufeinanderfolgenden Nasen (72) eingreift.

6. Schaufelrad nach einem der Ansprüche 3 bis 5, **dadurch gekennzeichnet, dass** der ringförmige Vorsprung (48) eine in Richtung stromabwärts offene, ringförmige Nut zum Aufnehmen der Dichtungseinrichtungen aufweist, wobei diese Nut innen von der zylindrischen Wand (54) und außen von einer kegelstumpfförmigen Ringwand (68) mit in Richtung stromabwärts sich vergrößerndem Querschnitt begrenzt wird.

7. Schaufelrad nach Anspruch 6, **dadurch gekennzeichnet, dass** die Dichtungseinrichtungen eine ringförmige Dichtung (84) aufweisen, die radial zwischen der kegelstumpfförmigen Wand (68) und den an der stromaufwärtigen Seite der Scheibe vorspringenden Haltemitteln (70) zum radialen Festhalten eingesetzt ist, wobei die Dichtung (84) dazu geeignet ist, sich bei Drehung des Schaufelrads durch Zentrifugalwirkung radial nach außen zu verlagern und sich an die kegelstumpfförmige Wand (68) und an die stromaufwärtigen Enden der Plattformen anzulegen.

8. Schaufelrad nach Anspruch 7, **dadurch gekennzeichnet, dass** die ringförmige Dichtung (84) einen im Wesentlichen dreieckförmigen Querschnitt hat und eine kegelstumpfförmige Seite (86) aufweist, die dazu bestimmt ist, mit der kegelstumpfförmigen Wand (68) des Vorsprungs (48) in Kontakt zu gelangen, sowie eine im Wesentlichen radial verlaufende Seite (88), die dazu bestimmt ist, axial in Anlage an eine radiale Seite der stromaufwärtigen Enden der Plattformen der Schaufeln zu gelangen.

9. Schaufelrad nach einem der vorangehengenden Ansprüche, **dadurch gekennzeichnet, dass** der ringförmige Vorsprung (48) über einen stromaufwärtigen Flansch (46), der an die Rotorscheibe befestigt ist, axial an die Rotorscheibe (50) gespannt ist.

10. Schaufelrad nach einem der vorangehengenden Ansprüche, **dadurch gekennzeichnet, dass** die Schaufeln aus einem Verbundmaterial mit Keramikmatrix ausgebildet sind.

11. Turbotriebwerk, wie etwa Turbostrahltriebwerk oder Turboprop-Triebwerk für Flugzeuge, enthaltend zumindest ein Schaufelrad nach einem der vorangehenden Ansprüche, insbesondere in einer Niederdruckturbine.

## Claims

1. A rotor wheel for a turbine engine such as an airplane turboprop or turbojet, the wheel comprising a rotor disk (50) having teeth (14) at its outer periphery defining slots (18) for axially mounting and radially retaining blade roots, the blades including platforms arranged circumferentially end to end to define an annular flow passage for an air stream, an annular lip (48) extending substantially axially upstream being fitted on an upstream face of the disk (50) to limit air passing out from the annular passage, sealing means (48) being provided between the annular lip (48) and the upstream ends of the platforms of the blades, the rotor wheel being **characterized in that** the annular lip (48) comprises an annular rim (52) extending axially downstream from and radially towards the inside of radial retaining means (70) for retaining the annular lip (48) on the disk (50), these retaining means (70) being formed to project axially from the upstream face of the disk (50), the sealing means (84) being arranged radially inside the annular lip (48) and upstream ends of the platforms of the blades.

2. A rotor wheel according to claim 1, **characterized in that** the radial retaining means (70) are formed at the upstream and radially outer ends of the teeth (14) of the disk (50).

3. A rotor wheel according to claim 1 or claim 2, **characterized in that** the annular rim (52) of the lip (48) comprises a substantially cylindrical wall (54) bearing radially outwards against the radial retaining means (70) and connected at its downstream end to a radial annular wall (56).

4. A rotor wheel according to claim 3, **characterized in that** lugs (72) are formed projecting axially from the upstream face of the disk (50), substantially at the bases of the teeth (14) of the disk (50) and facing the radially inner end of the radial annular rim (52) of the lip (48).

5. A rotor wheel according to claim 4, **characterized in that** the radial annular wall (56) of the rim (52) of the lip (48) includes at least one anti-rotation finger (58) projecting radially inwards and engaged circumferentially between two consecutive lugs (72).

6. A rotor wheel according to any one of claims 3 to 5, **characterized in that** the annular lip (48) includes an annular groove that is open downstream to house sealing means, the groove being defined internally by the cylindrical wall (54) and externally by a frustoconical annular wall (68) of section that increases going downstream.

7. A rotor wheel according to claim 6, **characterized in that** the sealing means comprise an O-ring (84) interposed radially between the frustoconical wall (68) and the radial retaining means (70) projecting from the upstream face of the disk, said O-ring (84) being suitable for moving radially outwards under the centrifugal effect during rotation of the rotor wheel and for pressing against the frustoconical wall (68) and against the upstream ends of the platforms.

8. A rotor wheel according to claim 7, **characterized in that** the O-ring (84) is of substantially triangular section and includes a frustoconical face (86) for coming into contact with the frustoconical wall (68) of the lip (48) and a substantially radial face (88) for pressing axially against radial faces of the upstream ends of the platforms of the blades.

9. A rotor wheel according to any preceding claim, **characterized in that** the annular lip (48) is clamped axially against the rotor disk (50) by an upstream cheek plate (46) fastened to the rotor disk.

10. A rotor wheel according to any preceding claim, **characterized in that** the blades are made of ceramic matrix composite material.

11. A turbine engine such as an airplane turboprop or turbojet including at least one rotor wheel according to any preceding claim, in particular in a low-pressure turbine.
